# EUROPÄISCHE PATENTSCHRIFT

(11) **EP 3 809 515 B1**
(45) Veröffentlichungstag und Bekanntmachung des Hinweises auf die Patenterteilung: **24.07.2024**
(21) Anmeldenummer: 20199245.0
(22) Anmeldetag: 30.09.2020
(51) Int. Cl.: H01M 50/204, H01M 50/202, H01M 50/244, H01M 10/6557

(54) **BATTERIEMODUL MIT WENIGSTENS EINER EINZELZELLE UND EINEM ZELLHALTER ZUR AUFNAHME DER WENIGSTENS EINEN EINZELZELLE SOWIE EIN VERFAHREN ZUR HERSTELLUNG EINES SOLCHEN BATTERIEMODULS**
BATTERY MODULE WITH AT LEAST ONE SINGLE CELL AND A CELL HOLDER FOR RECEIVING THE AT LEAST SINGLE CELL AND METHOD FOR MANUFACTURING SUCH A BATTERY MODULE
MODULE DE BATTERIE POURVU D'AU MOINS UN SEUL ÉLÉMENT ET D'UN PORTE-ÉLÉMENT PERMETTANT DE RECEVOIR AU MOINS UN SEUL ÉLÉMENT AINSI QUE PROCÉDÉ DE FABRICATION D'UN TEL MODULE DE BATTERIE

(30) Priorität: 14.10.2019 DE 102019215775
(43) Veröffentlichungstag der Anmeldung: 21.04.2021
(73) Patentinhaber: Robert Bosch GmbH, 70442 Stuttgart (DE)
(72) Erfinder: Fomen, Gilles Desmond, 75417 Muehlacker (DE)

(56) Entgegenhaltungen:
- WO-A1-2019/176560
- DE-A1- 102011 104 499
- DE-A1- 102012 217 041
- DE-A1- 102014 200 983
- DE-A1- 102015 011 898
- DE-A1- 102016 005 967

## Beschreibung

### Stand der Technik

Die Erfindung geht aus von einem Batteriemodul mit wenigstens einer Einzelzelle und einem Zellhalter zur Aufnahme der wenigstens einen Einzelzelle, wobei die wenigstens eine Einzelzelle vom Zellhalter aufgenommen ist und wobei der Zellhalter derartig ausgebildet ist, dass der Zellhalter die wenigstens eine Einzelzelle mechanisch fixiert.

### Solch ein Batteriemodul ist beispielsweise in der Offenlegungsschrift

US 2016/0211562 A1 offenbart. In dieser Schrift ist ein Batteriemodul offenbart, welches mehrere Einzelzellen aufweist. Hierbei werden die Einzelzellen durch einen Zellhalter mechanisch fixiert, indem die Einzelzellen in den mehrstückigen Zellhalter eingebaut werden, wobei der Zellhalter zusammengeschraubt oder zusammengeclipst wird. Das Einbringen und Fixieren der Einzelzellen erfolgt somit zeitgleich. Weiterer relevanter Stand der Technik ist in der Druckschrift DE 10 2014 200983 A1 offenbart.

### Offenbarung der Erfindung

Die Erfindung ist durch die unabhängigen Ansprüche 1 und 5 definiert. Bevorzugte Ausführungsformen der Erfindung sind in den abhängigen Ansprüchen definiert.

Die Erfindung geht aus von einem Batteriemodul mit wenigstens einer Einzelzelle und einem Zellhalter zur Aufnahme der wenigstens einen Einzelzelle, wobei die wenigstens eine Einzelzelle vom Zellhalter aufgenommen ist und wobei der Zellhalter derartig ausgebildet ist, dass der Zellhalter die wenigstens eine Einzelzelle mechanisch fixiert.

Ein Aspekt der Erfindung besteht darin, dass der Zellhalter einstückig ausgebildet ist.

Vorteilhaft ist hierbei, dass nicht mehrere Zellhalterteile zu einem Zellhalter zusammengebaut werden, wodurch eine einfachere Herstellung des Batteriemoduls ermöglicht wird. Zudem sinken hierdurch die Herstellungskosten. Des Weiteren ist der Zellhalter insbesondere derartig ausgestaltet, dass die Einzelzelle radial vollständig vom Zellhalter ummantelt und zudem auch vertikal bereichsweise vom Zellhalter ummantelt ist. Dies führt zu einer verbesserten Wärmeleitung von der Einzelzelle über den Zellhalter in die Umgebung des Batteriemoduls, was wiederum einen erhöhten Schutz der Einzelzelle gegen Propagation darstellt.

Das Batteriemodul weist hierbei wenigstens eine galvanische Einzelzelle auf, welche als elektrochemischer Energiespeicher dient und insbesondere wiederaufladbar ist, beispielsweise ein Lithium-Ionen-Akkumulator. Hierdurch kann elektrische Energie aus dem Batteriemodul entnommen, aber auch in das Batteriemodul eingebracht werden.

Die Einzelzelle ist insbesondere als Rundzelle ausgestaltet, wobei eine mechanische Fixierung der Einzelzelle relativ zum Zellhalter erfolgt ist. Der Zellhalter ist entsprechend derartig ausgebildet, dass eine Einzelzelle in diesen eingebracht werden kann und weist hierfür eine entsprechende Aufnahme auf.

Das erfindungsgemäße Batteriemodul sieht vor, dass die wenigstens eine Einzelzelle mittels eines Heißverstemmprozesses fixiert ist. Vorteilhaft ist hierbei, dass durch das Heißverstemmen ein axialer und radialer Toleranzausgleich gewährleistet werden kann.

Zudem ermöglicht das Heißverstemmen eine mechanisch steife Verbindung, die wiederrum elektronische Kontaktierungsmöglichkeiten ermöglicht, welche bei einem verschraubten oder verclipsten Zellhalter nicht oder nur aufwändig umsetzbar sind. Eine solche elektronische Kontaktierungsmöglichkeit kann beispielsweise ein Ultraschallschweißen sein.

Eine weitere Ausgestaltung des erfindungsgemäßen Batteriemoduls sieht vor, dass der Heißverstemmprozesses vollständig entlang einer stirnseitigen Kante der wenigstens einen Einzelzelle erfolgt ist.

Hierunter ist zu verstehen, dass die Einzelzelle im vollen Umfang entlang der stirnseitigen Kante heißverstemmt ist.

Vorteilhaft ist hierbei, dass eine Dichtverbindung realisiert ist, welche den Raum zwischen der Einzelzelle und dem Zellhalter in radialer Richtung und auch in vertikaler Richtung gegenüber außen abdichtet. Dies bietet zum Beispiel die Möglichkeit, dass ein Medium zwischen der Einzelzelle und dem Zellhalter eingebracht werden kann.

Alternativ ist es auch denkbar, dass der Heißverstemmprozess bereichsweise entlang der stirnseitigen Kante der Einzelzelle erfolgt.

Gemäß einer Ausgestaltung des erfindungsgemäßen Batteriemoduls ist vorgesehen, dass ein Wärmeleitmedium und/oder eine Vergussmasse zwischen der wenigstens einen Einzelzelle und dem Zellhalter eingebracht ist.

Vorteilhaft ist hierbei, dass das Wärmeleitmedium und/oder die Vergussmasse insbesondere Partikel bzw. Materialien aufweisen können, welche einen Flammschutz oder weitere Funktionen bieten, um beispielsweise den Schutz der Einzelzelle gegen Propagation zu erhöhen.

Zudem kann die Wärmeabfuhr von der Einzelzelle nach außen verbessert werden.

Gemäß einer weiteren Ausgestaltung des erfindungsgemäßen Batteriemoduls ist vorgesehen, dass der Zellhalter eine Querleitung aufweist, über welche das Wärmeleitmedium und/oder die Vergussmasse einbringbar ist.

Vorteilhaft ist hierbei, dass dies eine einfache Möglichkeit darstellt, das Wärmeleitmedium und/oder die Vergussmasse einzubringen.

Zudem kann bei mehreren Einzelzellen, welche über Querleitungen verbunden sind, ein verbesserter Wärmeaustausch erfolgen. Hierbei kann das Ausmaß der Wärmeleitung über den Durchmesser der Querleitungen eingestellt werden. Des Weiteren kann durch das lokale Einbringen der Vergussmasse, die Menge der Vergussmasse gegenüber bisherigen Batteriemodulen, welche einen globale Verguss der Einzelzellen aufweisen, reduziert werden, wodurch wiederum sowohl Gewicht als auch Materialkosten eingespart werden können.

Zudem ist es denkbar, dass die Querleitung des Zellhalters mittels eines Temperatursensors verschlossen wird, beispielsweise mittels eines NTC-Sensors. Hierdurch kann die Temperatur des Wärmeleitmediums und/oder der Vergussmasse erfasst werden, wobei hieraus auf eine Fehlfunktion bzw. mögliche Propagation der Einzelzelle geschlossen werden kann.

Die Erfindung betrifft zudem ein Verfahren zur Herstellung eines erfindungsgemäßen Batteriemoduls, mit wenigstens folgenden Verfahrensschritten:
a. Bereitstellen wenigstens einer Einzelzelle und eines einstückigen Zellhalters zur Aufnahme der wenigstens einen Einzelzelle,
b. Einbringen der wenigstens einen Einzelzelle in den Zellhalter,
c. Mechanisches Fixieren der wenigstens einen Einzelzelle durch den Zellhalter.

Die Verfahrensschritte a bis c laufen hierbei nacheinander ab.

Vorteilhaft ist hierbei, dass nicht mehrere Zellhalterteile zu einem Zellhalter zusammengebaut werden müssen, wodurch eine einfachere Herstellung des Batteriemoduls ermöglicht wird. Zudem sinken hierdurch die Herstellungskosten. Ein weiterer Vorteil besteht darin, dass durch das Fixieren der Zelle nach dem Einbringen in den Zellhalter und nicht während des Einbringens, der axiale und radiale Toleranzausgleich gewährleistet wird.

Insbesondere ist der Zellhalter derartig ausgestaltet, dass die eingebrachte Einzelzelle radial vollständig vom Zellhalter ummantelt und zudem auch vertikal bereichsweise vom Zellhalter ummantelt ist. Dies führt zu einer verbesserten Wärmeleitung von der Einzelzelle über den Zellhalter in die Umgebung des Batteriemoduls, was wiederum zu einem erhöhten Schutz des Batteriemoduls gegenüber Propagation führt, welche durch eine Einzelzelle verursacht wird.

In dem erfindungsgemäßen Verfahren ist vorgesehen, dass das mechanische Fixieren der wenigstens einen Einzelzelle im Verfahrensschritt c mittels eines Heißverstemmprozesses erfolgt.

Vorteilhaft ist hierbei, dass insbesondere durch das Heißverstemmen der Toleranzausgleich gewährleistet wird. Zudem ermöglicht das Heißverstemmen eine mechanisch steife Verbindung, die wiederrum elektronische Kontaktierungsmöglichkeiten ermöglicht, welche bei einem verschraubten oder verclipsten Zellhalter nicht oder nur aufwändig umsetzbar sind. Eine solche elektronische Kontaktierungsmöglichkeit kann beispielsweise das Ultraschallschweißen darstellen.

Gemäß einer vorteilhaften Ausgestaltung des erfindungsgemäßen Verfahrens ist vorgesehen, dass der Heißverstemmprozess im Verfahrensschritt c vollständig entlang einer stirnseitigen Kante der wenigstens einen Einzelzelle erfolgt. Vorteilhaft ist hierbei, dass eine Dichtverbindung realisiert ist, welche den Raum zwischen der Einzelzelle und dem Zellhalter in radialer Richtung gegenüber außen abdichtet. Dies bietet zum Beispiel die Möglichkeit, dass ein Medium zwischen der Einzelzelle und dem Zellhalter eingebracht werden kann.

Gemäß einer weiteren vorteilhaften Ausgestaltung des erfindungsgemäßen Verfahrens ist vorgesehen, dass nach dem Verfahrensschritt b ein Verfahrensschritt d abläuft, in welchem ein Wärmeleitmedium und/oder eine Vergussmasse zwischen der wenigstens einen Einzelzelle und dem Zellhalter eingebracht wird.

Vorteilhaft ist hierbei, dass das Wärmeleitmedium und/oder die Vergussmasse insbesondere Partikel bzw. Materialien aufweisen können, welche einen Flammschutz oder weitere Funktionen bieten, um beispielsweise den Schutz der Einzelzelle gegen Propagation zu erhöhen.

Zudem kann die Wärmeabfuhr von der Einzelzelle nach außen verbessert werden.

Gemäß einer weiteren vorteilhaften Ausgestaltung des erfindungsgemäßen Verfahrens ist vorgesehen, dass das Wärmeleitmedium und/oder die Vergussmasse über eine Querleitung des Zellhalters eingebracht wird. Vorteilhaft ist hierbei, dass dies eine einfache Möglichkeit darstellt, das Wärmeleitmedium und/oder die Vergussmasse einzubringen.

Zudem kann bei mehreren Einzelzellen, welche über Querleitungen verbunden sind, ein verbesserter Wärmeaustausch erfolgen. Hierbei kann das Ausmaß der Wärmeleitung über den Durchmesser der Querleitungen eingestellt werden. Des Weiteren kann durch das lokale Einbringen der Vergussmasse, die Menge der Vergussmasse gegenüber bisherigen Batteriemodulen, welche einen globale Verguss der Einzelzellen aufweisen, reduziert werden, wodurch wiederum sowohl Gewicht als auch Materialkosten eingespart werden können.

### Zeichnungen

Fig. 1 zeigt ein Ausführungsbeispiel eines erfindungsgemäßen Batteriemoduls.
Fig. 2 zeigt ein Ausführungsbeispiel eines erfindungsgemäßen Verfahrens zur Herstellung eines erfindungsgemäßen Batteriemoduls.

### Beschreibung von Ausführungsbeispielen

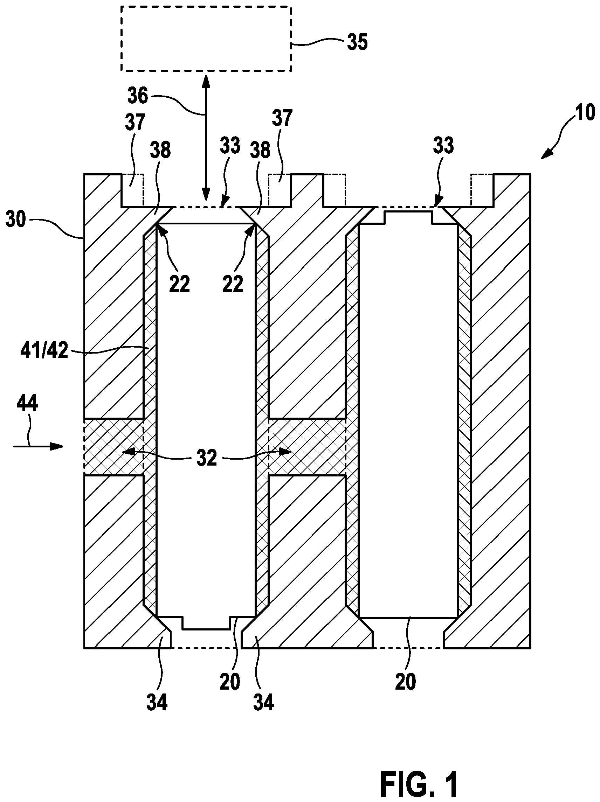

Fig. 1 zeigt ein Ausführungsbeispiel eines erfindungsgemäßen Batteriemoduls.

Dargestellt ist ein vertikaler Querschnitt durch ein erfindungsgemäßes Batteriemodul 10. Das Batteriemodul 10 weist hierbei zwei Einzelzellen 20 und einem Zellhalter 30 zur Aufnahme der beiden Einzelzellen 20 auf. Der Zellhalter 30 ist einstückig ausgebildet und dient zur Aufnahme der Einzelzellen 20.

Die Einzelzellen 20 sind in den Zellhalter 30 eingebracht und werden von diesem mechanisch fixiert. Insbesondere werden die Einzelzellen 20 hierbei durch eine Öffnung 33 in den Zellhalter 30 bis zu einem Anschlag 34 eingebracht, welcher als Vorsprung ausgestaltet ist. Anschließend erfolgt ein Heißverstemmprozess, um die Einzelzellen 20 im Zellhalter 30 mechanisch zu fixieren. Beim Heißverstemmprozess wird ein Bereich 37 des Zellhalters 30 mittels eines Stempels 35, welcher in Pfeilrichtung 36 mit einer vorbestimmten Kraft bewegt wird und eine vorbestimmte Temperatur aufweist, derartig verformt, dass sich je ein zweiter Anschlag 38 im Bereich der Öffnung 33 bildet, um die Einzelzellen 20 mechanisch zu fixieren. Somit ist der Zellhalter 30 im Bereich 37, welcher durch die Strichpunkt-Linie dargestellt ist, zum Anschlag 38 umgeformt worden. Insbesondere ist der Heißverstemmprozesses derartig ausgestaltet, dass dieser vollständig entlang einer stirnseitigen Kante 22 der jeweiligen Einzelzelle 20 erfolgt ist. Über die Öffnung 33 können die Einzelzellen 20 weiterhin elektrisch von außen kontaktiert werden. Insbesondere ist im Bereich des Anschlags 34 ebenfalls noch jeweils eine Öffnung vorhanden, um die Einzelzellen 20 elektrisch zu kontaktieren. Des Weiteren ist der Zellhalter 30 insbesondere derartig ausgestaltet, dass die Einzelzellen 20 radial vollständig vom Zellhalter 30 ummantelt und zudem auch vertikal bereichsweise vom Zellhalter 30 ummantelt sind.

Optional ist ein Wärmeleitmedium 41 und/oder eine Vergussmasse 42 zwischen der jeweiligen Einzelzelle 20 und dem Zellhalter 30 eingebracht. Hierbei weist der Zellhalter 30 insbesondere eine Querleitung 32 auf, über welche das Wärmeleitmedium 41 und/oder die Vergussmasse 42 in Pfeilrichtung 44 einbringbar ist. Zudem ist es denkbar, dass die Querleitung 32 des Zellhalters 30 mittels eines bildlich nicht dargestellten Temperatursensors nach außen hin verschlossen ist, beispielsweise mittels eines NTC-Sensors.

Insbesondere weisen das Wärmeleitmedium 41 und/oder die Vergussmasse 42 zudem Partikel bzw. Materialien auf, welche einen Flammschutz oder weitere Funktionen bieten, beispielsweise eine bessere Handhabung.

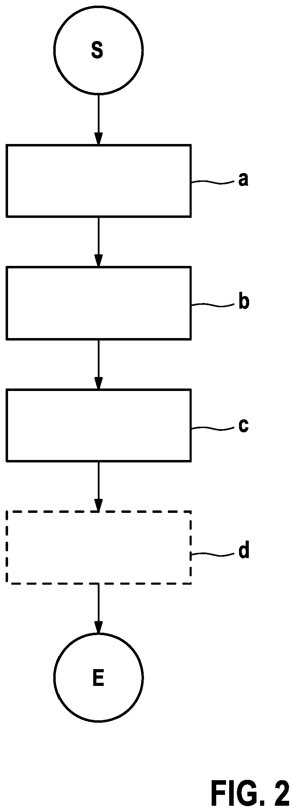

Fig. 2 zeigt ein Ausführungsbeispiel eines erfindungsgemäßen Verfahrens zur Herstellung eines erfindungsgemäßen Batteriemoduls.

Zuerst werden in einem Verfahrensschritt a wenigstens eine Einzelzelle 20 und ein einstückiger Zellhalter 30 zur Aufnahme der wenigstens einen Einzelzelle 20 bereitgestellt.

In einem Verfahrensschritt b wird anschließend die wenigstens eine Einzelzelle 20 in den Zellhalter 30 eingebracht.

Anschließend wird in einem Verfahrensschritt c die wenigstens eine Einzelzelle 20 durch den Zellhalter 30 mechanisch fixiert. Das mechanische Fixieren kann insbesondere mittels eines Heißverstemmprozesses erfolgen. Hierbei drückt ein Stempel 35 mit einer vorbestimmten Kraft auf den Zellhalter 20, wobei der Stempel 35 zudem eine vorbestimmte Temperatur aufweist. Durch den erhitzten Stempel 35 wird der Zellhalter 30 derartig verformt, dass die vom Zellhalter 30 aufgenommene Einzelzelle 20 mechanisch im Zellhalter 30 verstemmt wird. Insbesondere erfolgt das Heißverstemmen hierbei derartig, dass die Einzelzelle 20 vollständig entlang einer stirnseitigen Kante 22 der Einzelzelle 20 verstemmt wird.

Optional kann zusätzlich nach dem Verfahrensschritt b noch ein Verfahrensschritt d ablaufen, in welchem ein Wärmeleitmedium 41 und/oder eine Vergussmasse 42 zwischen der wenigstens einen Einzelzelle 20 und dem Zellhalter 30 eingebracht wird. Das Einbringen des Wärmeleitmediums 41 und/oder der Vergussmasse 42 erfolgt hierbei insbesondere über eine Querleitung 32 des Zellhalters 30.

Der Verfahrensschritt d kann erfolgen, sobald die Einzelzelle 20 im Zellhalter 30 eingebracht und die Einzelzelle 20 mechanisch fixiert ist, also nach dem Verfahrensschritt c. Es ist jedoch auch denkbar, dass der Verfahrensschritt d bereits nach dem Verfahrensschritt b und vor dem Verfahrensschritt c durchgeführt wird.

## Patentansprüche

1. Batteriemodul (10) mit wenigstens einer Einzelzelle (20) und einem Zellhalter (30) zur Aufnahme der wenigstens einen Einzelzelle (20), wobei die wenigstens eine Einzelzelle (20) vom Zellhalter (30) aufgenommen ist und wobei der Zellhalter (30) derartig ausgebildet ist, dass der Zellhalter (30) die wenigstens eine Einzelzelle (20) mechanisch fixiert, wobei
der Zellhalter (30) einstückig ausgebildet ist,
**dadurch gekennzeichnet, dass**
die wenigstens eine Einzelzelle (20) mittels eines Heißverstemmprozesses fixiert ist.

2. Batteriemodul (10) nach Anspruch 1, **dadurch gekennzeichnet, dass** der Heißverstemmprozesses vollständig entlang einer stirnseitigen Kante (22) der wenigstens einen Einzelzelle (20) erfolgt ist.

3. Batteriemodul (10) nach einem der vorhergehenden Ansprüche, **dadurch gekennzeichnet, dass** ein Wärmeleitmedium (41) und/oder eine Vergussmasse (42) zwischen der wenigstens einen Einzelzelle (20) und dem Zellhalter (30) eingebracht ist.

4. Batteriemodul nach Anspruch 3, **dadurch gekennzeichnet, dass** der Zellhalter (30) eine Querleitung (32) aufweist, über welche das Wärmeleitmedium (41) und/oder die Vergussmasse (42) einbringbar ist.

5. Verfahren zur Herstellung eines Batteriemoduls (10) nach einem der vorhergehenden Ansprüche, aufweisend wenigstens die folgenden Verfahrensschritte:
a. Bereitstellen wenigstens einer Einzelzelle (20) und eines einstückigen Zellhalters (30) zur Aufnahme der wenigstens einen Einzelzelle (20),
b. Einbringen der wenigstens einen Einzelzelle (20) in den Zellhalter (30),
c. Mechanisches Fixieren der wenigstens einen Einzelzelle (20) durch den Zellhalter (30) mittels eines Heißverstemmprozesses.

6. Verfahren nach Anspruch 5, **dadurch gekennzeichnet, dass** der Heißverstemmprozess im Verfahrensschritt c vollständig entlang einer stirnseitigen Kante (22) der wenigstens einen Einzelzelle (20) erfolgt.

7. Verfahren nach einem der Ansprüche 5 bis 6, **dadurch gekennzeichnet, dass** nach dem Verfahrensschritt b ein Verfahrensschritt d abläuft, in welchem ein Wärmeleitmedium (41) und/oder eine Vergussmasse (42) zwischen der wenigstens einen Einzelzelle (20) und dem Zellhalter (30) eingebracht wird.

8. Verfahren nach Anspruch 7, **dadurch gekennzeichnet, dass** das Wärmeleitmedium (41) und/oder die Vergussmasse (42) über eine Querleitung (32) des Zellhalters (30) eingebracht wird.

## Claims

1. Battery module (10) having at least one individual cell (20) and having a cell holder (30) for accommodating the at least one individual cell (20), wherein the at least one individual cell (20) is accommodated by the cell holder (30), and wherein the cell holder (30) is formed in such a way that the cell holder (30) mechanically fixes the at least one individual cell (20), wherein
the cell holder (30) is formed in one piece,
**characterized in that**
the at least one individual cell (20) is fixed by means of a hot-caulking process.

2. Battery module (10) according to Claim 1, **characterized in that** the hot-caulking process is realized entirely along an end-face edge (22) of the at least one individual cell (20).

3. Battery module (10) according to either of the preceding claims, **characterized in that** a heat-conducting medium (41) and/or a potting compound (42) are/is introduced between the at least one individual cell (20) and the cell holder (30).

4. Battery module according to Claim 3, **characterized in that** the cell holder (30) has a transverse line (32) via which the heat-conducting medium (41) and/or the potting compound (42) are/is introducible.

5. Method for producing a battery module (10) according to one of the preceding claims, comprising at least the following method steps:
a. providing at least one individual cell (20) and a one-piece cell holder (30) for accommodating the at least one individual cell (20),
b. introducing the at least one individual cell (20) into the cell holder (30),
c. mechanically fixing the at least one individual cell (20) by way of the cell holder (30) by means of a hot-caulking process.

6. Method according to Claim 5, **characterized in that** the hot-caulking process in the method step c is realized entirely along an end-face edge (22) of the at least one individual cell (20).

7. Method according to either of Claims 5 and 6, **characterized in that** the method step b is followed by a method step d in which a heat-conducting medium (41) and/or a potting compound (42) are/is introduced between the at least one individual cell (20) and the cell holder (30).

8. Method according to Claim 7, **characterized in that** the heat-conducting medium (41) and/or the potting compound (42) are/is introduced via a transverse line (32) of the cell holder (30).

## Revendications

1. Module de batterie (10) avec au moins une cellule individuelle (20) et un support de cellule (30) pour recevoir l'au moins une cellule individuelle (20), l'au moins une cellule individuelle (20) étant reçue par le support de cellule (30) et le support de cellule (30) étant réalisé de telle sorte que le support de cellule (30) fixe mécaniquement l'au moins une cellule individuelle (20),
le support de cellule (30) étant réalisé d'une seule pièce,
**caractérisé en ce que**
l'au moins une cellule individuelle (20) est fixée au moyen d'un processus de matage à chaud.

2. Module de batterie (10) selon la revendication 1, **caractérisé en ce que** le processus de matage à chaud est effectué entièrement le long d'un bord frontal (22) de l'au moins une cellule individuelle (20).

3. Module de batterie (10) selon l'une quelconque des revendications précédentes, **caractérisé en ce qu'**un milieu conducteur de chaleur (41) et/ou une masse de scellement (42) est introduit(e) entre l'au moins une cellule individuelle (20) et le support de cellule (30).

4. Module de batterie selon la revendication 3, **caractérisé en ce que** le support de cellule (30) présente une conduite transversale (32) par l'intermédiaire de laquelle le milieu conducteur de chaleur (41) et/ou la masse de scellement (42) peut être introduire).

5. Procédé de fabrication d'un module de batterie (10) selon l'une quelconque des revendications précédentes, présentant au moins les étapes de procédé suivantes :
a. la fourniture d'au moins une cellule individuelle (20) et d'un support de cellule d'une seule pièce (30) pour recevoir l'au moins une cellule individuelle (20),
b. l'introduction de l'au moins une cellule individuelle (20) dans le support de cellule (30),
c. la fixation mécanique de l'au moins une cellule individuelle (20) par le support de cellule (30) au moyen d'un processus de matage à chaud.

6. Procédé selon la revendication 5, **caractérisé en ce que** le processus de matage à chaud dans l'étape de procédé c est effectué entièrement le long d'un bord frontal (22) de l'au moins une cellule individuelle (20).

7. Procédé selon l'une quelconque des revendications 5 à 6, **caractérisé en ce qu'**après l'étape de procédé b se déroule une étape de procédé d, dans laquelle un milieu conducteur de chaleur (41) et/ou une masse de scellement (42) est introduit(e) entre l'au moins une cellule individuelle (20) et le support de cellule (30).

8. Procédé selon la revendication 7, **caractérisé en ce que** le milieu conducteur de chaleur (41) et/ou la masse de scellement (42) sont introduits par l'intermédiaire d'une conduite transversale (32) du support de cellule (30).
